# EUROPEAN PATENT APPLICATION

(11) **EP 3 450 758 A1**
(43) Date of publication of application: **06.03.2019**
(21) Application number: 17188197.2
(22) Date of filing: 28.08.2017
(51) Int. Cl.: F04B 43/04, F16L 11/118

(54) **A SMART HOSE FOR CLEARING A BLOCKAGE**

(71) Applicant: Vestel Elektronik Sanayi ve Ticaret A.S., 45030 Manisa (TR)
(72) Inventor: TÜNAY, Erkan, 45030 Manisa (TR)
(74) Representative: Ascherl, Andreas

(57) **Abstract**

Hose (100) including a tubular body (10), a flow meter (20), a plurality of electrically conducting elements (R₁, R₂, R₃, R₄, R₅, R₆), flexible load cells (40) and a control unit (50), whereby the electrically conducting elements (R₁, R₂, R₃, R₄, R₅, R₆) are serially arranged along a longitudinal axis (9) of the smart hose (100), and are attached to a body (10) of the smart hose (100) and, on electromagnetic excitation of adjacent electrically conducting elements (R₁, R₂, R₃, R₄, R₅, R₆), the segments in the hose (100) are elastically deformable longitudinally and are configured to expand radially when a current of sufficient magnitude flows through said adjacent electrically conducting elements (R₁, R₂, R₃, R₄, R₅, R₆), whereby, by elastically deforming the segments of the hose (100) along a longitudinal and radial direction, a blockage in the hose (100) can be moved towards an outside (103) of the hose (100).

## Description

The present invention relates to a smart hose according to claim 1 of the present disclosure and to a method for clearing a blockage in a smart hose according to claim 11 of the present disclosure.

### Background of the Invention

In modern times a lot of machines - household and industrial, appliances such as washing machine, dishwasher, other major household appliances or white goods, etc, household or industrial setups such as a car cleaning sheds or boiler cleaning application, and fixtures such as bathrooms, etc use water or other liquids for various purposes. Such as use of water and detergent to wash clothes in a washing machine or to clean utensils in a dishwasher. After or during the intended use the appliances or setups generate effluent, e.g. dirty water resulting from cleaning of clothes in the washing machine, that is intended to be ejected out or drained out from the appliance into drainage system such as waste water drainage network. For the purpose of conducting the effluent from the appliance into the waste water drainage network, generally a hose or tubing, also referred to as drain pipe or exit hose, is used.

Often, the hose gets clogged by solid or semisolid wastes forming blockage - partial or complete - at one or several positions within the hose. Although the appliances, such as the washing machines and dishwashers, generally have solid waste filter for protection of hose blockage but small size solid sticky particles (food wastes) or thin, tall shaped flexible solid particles (clothes hair or cotton) can pass through the filter and block or clog the hose. For example, in washing machine drain pipes, clothe fibers, lint, or hairs can cause full or partial blockage within the hose or in dishwasher, solid food wastes can cause full or partial blockage of the hose. The presence of the full or partial blockage results in reduction of drainage capacity of the appliances which, if not cleared or removed from the hose, may result into malfunctioning of the appliance and further can cause reduction in the life time of the appliance.

Several approaches are known in the art for clearing or removal of any blockages which may develop in the hose. One such approach is disclosed in Chinese Patent Application CN105040808A which presents an intelligent drainage pipeline. The intelligent drainage pipeline comprises a drainage pipe, wherein a plurality of groups of electromagnetic coils are wound around the wall of the drainage pipe and distributed along the radial direction of the drainage pipe; the electromagnetic coils are connected with current control modules and current detection modules; the current control modules and the current detection modules are connected with a central control module; the intelligent drainage pipeline further comprises magnet balls capable of rolling in the drainage pipe. According to the intelligent drainage pipeline, the blocked position of the pipeline can be positioned, and the blocking matters can be cleaned by adopting different methods according to the characteristics of the blocking matters, so that the cleaning effect is obvious and is specific.

Another approach is presented in United States Patent application US 4053955A which presents a drain cleaning tool. A hydraulic plunger for cleaning a clogged drain composed of a casing with a piston movable therein and being open at one end is presented as the drain cleaning tool. A fitting is provided on the open end that fits against the drain inlet. A water inlet is provided in the casing to permit water to fill the casing on the side of the piston that is open to the drain pipe and the drain pipe to the stoppage therein. An electromagnetic unit is carried within the casing and has a driven member that strikes the piston to create a relatively large impact force against the water and stoppage in the drain.

Another approach is presented in United States Patent application US4906367A which presents a Lint strainer for washing machine drains. The lint strainer for removing the lint from the exit hose of a washing machine before the lint can enter the drain of the residence or other structure in which the washing machine is located. The lint strainer has a flexible fabric mesh strainer tube having an open end and a closed end. A polymeric ring is affixed to the open end, and the polymeric ring is larger than the opening of the drain pipe which conducts the waste away from the washing machine.

Yet another approach is presented in European Patent Application EP 1688530 A1 which discloses a Clothes washing machine with improved filter assembly. The clothes washing machine comprising a washing tub, a drain pipe provided under said tub and connecting it with a drain pump chamber, said drain pipe comprising a central length and a final length oriented horizontally towards said drain pump chamber, a hydraulic impeller provided within said drain pump chamber, wherein in correspondence to and below said final length there is arranged an auxiliary filtering chamber connected to said final length via a horizontal aperture provided in the bottom wall of said final length. Said horizontal aperture is situated at the beginning of said final length, as viewed in the direction of flow of the liquor being let off said tub.

Hence, there exists a need for an effluent ejection technique, preferably a smart hose that is able to detect and clear blockage by itself and a method for clearing a blockage in the smart hose.

### Object of the Invention

It is therefore an object of the present invention to provide an effluent ejection technique, preferably a smart hose that is able to detect and clear blockage by itself and a method for clearing a blockage in the smart hose.

### Description of the Invention

The aforementioned object is achieved by a smart hose, for ejecting an effluent to an outside of the smart hose, according to claim 1 of the present invention, which presents a first aspect of the present technique. The smart hose includes a tubular body, a flow meter, a plurality of electrically conducting elements, flexible load cells and a control unit. The tubular body has a longitudinal axis. The tubular body defines a drain path extending along the longitudinal axis. The tubular body is elastically deformable along the longitudinal axis. The tubular body is also elastically deformable along a radial direction normal to the longitudinal axis. The flow meter determines a flow rate of the effluent through the drain path.

The plurality of electrically conducting elements are serially arranged adjacent to each other and attached to, for example embedded in, the tubular body at different positions along the longitudinal axis to define a plurality of longitudinally disposed segments in the tubular body. Each segment is limited by a pair of the electrically conducting elements. An upstream member, i.e. the electronically conducting element, of the pair is disposed upstream and a downstream member, i.e. another electrically conducting element of the pair is disposed downstream of the corresponding segment.

Each of the electrically conducting elements at least partially encircles the longitudinal axis. Each electrically conducting element includes a first electrical node, a second electrical node and a flow path defined between the first and the second electrical node. The first electrical node, hereinafter also referred to as the first node, and the second electrical node, hereinafter also referred to as the second node, are electrical contacts on each of the electrically conducting element. The flow path is for conduction of an electrical current. The electrical current can enter the flow path through one of the electrical nodes, hereinafter also referred simply to as the nodes, and exit the flow path through the other of the nodes. For example, the electrical current enters the flow path through the second node and exits the flow path through the first node, and flows in a first direction for example a clockwise direction. Alternatively, the electrical current enters the flow path through the first node and exits the flow path through the second node, and flows in a second direction for example a counter-clockwise direction or an anti-clockwise direction i.e. opposite to the clockwise direction.

Each of the electrically conducting elements is configured to undergo expansion and contraction on conduction and cessation of the electrical current, respectively, resulting into radial expansion or radial contraction of the tubular body at the corresponding position since the electrically conducting element is attached to the tubular body at these corresponding positions.

At least one flexible load cell extends between the electrically conducting elements of the pair for each segment, i.e. between the upstream and the downstream members of the pair. The flow cell is coupled to the segment limited by the pair. The load cell determines an axial distance between the electrically conducting elements of the pair for example by converting the deformation experienced by the segment as a result of electromagnetic attraction or repulsion between the electrically conducting elements of the pair of the segment.

The control unit has an electrical source and a microcontroller. The control unit performs the following functions:
- receives a signal from the flow meter and determines presence of at least a partial blockage in the drain path by using the flow rate of the effluent through the drain path;
- successively provides probe electrical currents simultaneously to the upstream and downstream members of different pairs, i.e. for example at one time instance to the upstream and downstream members of one pair, and then at a subsequent time instance to the upstream and downstream members of an adjacent pair, and then at a further subsequent time instance to the upstream and downstream members of another adjacent pair adjacent to the adjacent pair, and so on and so forth, wherein the probe electrical currents provided to the members are in same direction thereby causing the members of the pair to attract each other, consequently resulting in longitudinal contraction of the segment of the tubular body limited by the pair to which the probe current is provided;
- receives a load signal from the flexible load cells of the segments and determines a blocked segment, wherein the blocked segment is the segment of the tubular body that undergoes the longitudinal contraction equal to or less than a predetermined threshold as a result of the probe electrical currents provided to the members of the segment.

After determining the blocked segment, i.e. determining the location of the blockage, the control unit performs the following functions:
- provides a first electrical current to the downstream member of the pair defining the blocked segment to cause radial expansion at the corresponding position in the tubular body; and
- provides a second electrical current to the upstream member of the pair defining the blocked segment such that a push is generated on the blockage.

As a result of the radial expansion of the smart hose, hereinafter also referred to as the hose, and as a result of the push generated on the blockage, the blockage is moved or displaced from the blocked segment to a segment downstream, with reference to the flow direction of the effluent, of the blocked segment. Thus, downstream segment then becomes the blocked segment say a second blocked segment, and the control unit thereafter performs the following functions:
- provides a first electrical current to the downstream member of the pair defining the second blocked segment to cause radial expansion at the corresponding position in the tubular body; and
- provides a second electrical current to the upstream member of the pair defining the second blocked segment such that a push is generated on the blockage. As a result of the radial expansion of the hose and as a result of the push generated on the blockage, the blockage is moved or displaced from the second blocked segment to a segment downstream, with reference to the flow direction of the effluent, of the second blocked segment. The aforementioned action of the control unit is repeated till the blockage is cleared out of the last segment i.e. the segment which ends at the exit of the hose.

The push can be generated in a variety of ways. In an embodiment of the hose, the second electrical current and the first electrical current are in same direction thereby causing attraction between the upstream member and the downstream member of the pair which in turn causes longitudinal contraction in the blocked segment, consequently generating the push on the blockage. Since the downstream member is radially expanded or in other words dilated, the blockage finds an exit through the downstream member into the segment downstream of the blocked segment. Alternatively, in another embodiment of the hose, the control unit provides the second electrical current to the upstream member with such magnitude to cause radial expansion at the corresponding position in the tubular body. The second electrical current and the first electrical currents are in different directions and thus causing a longitudinal expansion of the blocked segment such as a squeeze on the blocked segment. The control unit then decreases the magnitude of the second electrical current to cause subsequent radial contraction at the corresponding position in the tubular body. As a result of the radial contraction subsequent to the radial expansion of the upstream member the push is generated on the blockage. In general the push is generated by either squeezing, i.e. radially contracting, the upstream member of the pair of the blocked segment, or by contracting the blocked segment by generating an electromagnetic attraction between the upstream and the downstream member of the pair of the blocked segment, or by both.

In an embodiment of the hose, the electrically conducting elements, hereinafter also referred to as the elements, are polygonal in shape. The elements may be a closed polygon having a part such as an insulator placed in-between the sides of the polygon such that one end the insulator is position of the first node and the other end of the insulator is position of the second node, and thus electrical current can flow through the polygonal shaped element sans the insulator. Alternatively, in another embodiment of the hose, the polygonal shape is an open polygon. The polygon can have any number of sides for example the polygon may be a hexagon, a heptagon, an octagon, a nonagon, a decagon, a dodecagon, and so on and so forth, thus enabling different shapes of the hose.

In another embodiment of the hose, the elements are circular in shape for example an electrically conducting ring. A part of the ring may be formed of an insulating material such that one end the insulator is position of the first node and the other end of the insulator is position of the second node, and thus electrical current can flow through the ring sans the insulator. Alternatively, in another embodiment of the hose, the circular shape is a circular arc. In yet another embodiment of the hose, the circular arc shaped element is such that an angle subtended by the circular arc at the longitudinal axis is equal to or greater than 180 degree and less than 360 degree, particularly greater than 270 degree. Thus, the element is almost a complete circle but open at one section of the ring. The ring shape is preferred shape as the hoses generally used are tubular shaped with circular cross-section.

The elements may be formed from lead or aluminium. These provide readily available materials and thus make the smart hose cost effective. Alternatively, the elements are formed of an electrically conductive material, for example an alloy, having a linear co-efficient (α) of thermal expansion at 20°C equal to or greater than 30, the linear co-efficient (α) of thermal expansion expressed in 10⁻⁶ K⁻¹. Thus, the radial expansion and subsequent radial contraction i.e. the squeeze generated by the elements may generate push with greater energy.

The aforementioned objective is also achieved by a method for clearing a blockage in a smart hose according to claim 11, which presents a second aspect of the present technique. The smart hose is same as the smart hose described hereinabove in the abovementioned first aspect of the present technique. In the method, a flow rate of the effluent through the drain path is determined, preferably by using a flow meter. Thereafter, presence of at least a partial blockage in the drain path is determined, with a control unit such as a processor, by using the flow rate of the effluent through the drain path.

Subsequently in the method a location of the blockage is determined by the following steps. First, by successively providing probe electrical currents simultaneously to the upstream and downstream members of different pairs, i.e. for example at one-time instance to the upstream and downstream members of one pair, and then at a subsequent time instance to the upstream and downstream members of an adjacent pair, and then at a further subsequent time instance to the upstream and downstream members of another adjacent pair adjacent to the adjacent pair, and so on and so forth. The probe electrical currents provided to the members are in same direction thereby causing the members of the pair to attract each other, consequently resulting in longitudinal contraction of the segment of the tubular body limited by the pair to which the probe current is provided. Subsequently, an axial distance between the electrically conducting elements of the pair is determined. Finally, a blocked segment is determined. The blocked segment is the segment of the tubular body that undergoes the longitudinal contraction equal to or less than a predetermined threshold as a result of the probe electrical currents provided to the members of the segment.

In the method of the present invention, after the location of the blockage has been determined i.e. after the blocked segment has been identified, the following steps are performed to clear the blockage from the blocked segment. A first electrical current is provided to the downstream member of the pair defining the blocked segment thereby causing radial expansion at the corresponding position in the tubular body. Simultaneously or subsequently with the aforementioned step, a second electrical current is provided to the upstream member of the pair defining the blocked segment such that a push is generated on the blockage.

In the method, as a result of the radial expansion or dilation of the hose, and as a result of the push generated on the blockage, the blockage is moved or displaced from the blocked segment to a segment downstream, with reference to the flow direction of the effluent, of the blocked segment. The downstream segment then becomes the blocked segment say a second blocked segment, and the method is continued further by:
- providing a first electrical current to the downstream member of the pair defining the second blocked segment to cause radial expansion at the corresponding position in the tubular body; and
- providing a second electrical current to the upstream member of the pair defining the second blocked segment such that a push is generated on the blockage. As a result of the radial expansion of the hose and as a result of the push generated on the blockage, the blockage is moved or displaced from the second blocked segment to a segment downstream, with reference to the flow direction of the effluent, of the second blocked segment. The aforementioned steps of the method are repeated till the blockage is cleared out of the last segment i.e. the segment which ends at the exit of the hose.

As aforementioned with regard to the first aspect of the present invention, the push can be generated in the method of the present technique in a variety of ways, same as explained hereinabove with respect to the first aspect. In general, the push is generated by either squeezing, i.e. radially contracting, the upstream member of the pair of the blocked segment, or by contracting the blocked segment by generating an electromagnetic attraction between the upstream and the downstream member of the pair of the blocked segment, or by both.

In an embodiment of the method, the method further includes providing a third electrical current to the electrically conducting element positioned immediately upstream of the upstream member. The third electrical current is in same direction as the second electrical current; however, a magnitude of the third electrical current is lesser than the magnitude of the first and the second electrical currents. This causes a longitudinal contraction in the segment upstream of the blocked segment thus strengthening the push on the blockage. Moreover, since the magnitude of the third electrical current is lesser the tubular body at the corresponding position does not undergo dilation or radial expansion as compared to the radial expansion of the upstream member of the pair of the blocked segment, and thus inhibiting the blockage from moving upstream in the hose.

Further benefits, goals and features of the present invention will be described by the following specification of the attached figures, in which components of the invention are exemplarily illustrated. Components of the system and the method according to the invention, which match at least essentially with respect to their functions, can be marked with the same reference sign, wherein such components do not have to be marked or described in all figures.

The invention is just exemplarily described with respect to the attached figures in the following.

### Brief Description of the Drawings

Fig. 1 schematically represents a perspective view of an exemplary embodiment of parts of a smart hose of the present technique,
Fig. 2 schematically represents a cross-sectional view of the exemplary embodiment of the smart hose of Fig. 1,
Fig. 3 schematically represents an exemplary embodiment of an electrically conducting element of the smart hose of the present technique,
Fig. 4 schematically represents an exemplary embodiment of the smart hose of the present technique,
Fig. 5 schematically represents an exemplary scheme of working of the smart hose of Fig. 4 at different time instances, and
Fig. 6 is a flow chart depicting a method of clearing a blockage in the smart hose; in accordance with aspects of the present technique.

### Detailed Description of the Drawings

It may be noted that in the present disclosure, the terms 'first', 'second', 'third', etc are used herein only to facilitate discussion and carry no particular temporal or chronological significance unless otherwise indicated.

The basic idea of the present technique is to provide a smart hose capable of clearing a blockage. The smart hose includes an elastically deformable tubular body, a flow meter, a plurality of electrically conducting elements, flexible load cells and a control unit. The electrically conducting elements are serially arranged along a longitudinal axis of the smart hose, and are attached to a body of the smart hose. On electromagnetic excitation of adjacent electrically conducting elements segments in the smart hose are elastically deformed longitudinally - extended or contracted - depending on the direction of the electrical currents passed through the adjacent electrically conducting elements. Furthermore, due to linear expansion of the electrically conducting elements the smart hose at positions where the body is attached to the electrically conducting elements is elastically deformed radially. The flow meter is used to determine a blockage in the smart hose. The load cells help to determine a location of the blockage in the smart hose. After the location of the blockage is determined, by elastically deforming the segments in the longitudinal and the radial directions, a blockage in smart hose is moved towards an outside of the smart hose. The control unit is configured to regulate direction and magnitude of the electrical current passed through different electrically conducting elements to generate corresponding longitudinal and radial elastic deformations in the segments to generate a push on the blockage towards an exit of the smart hose.

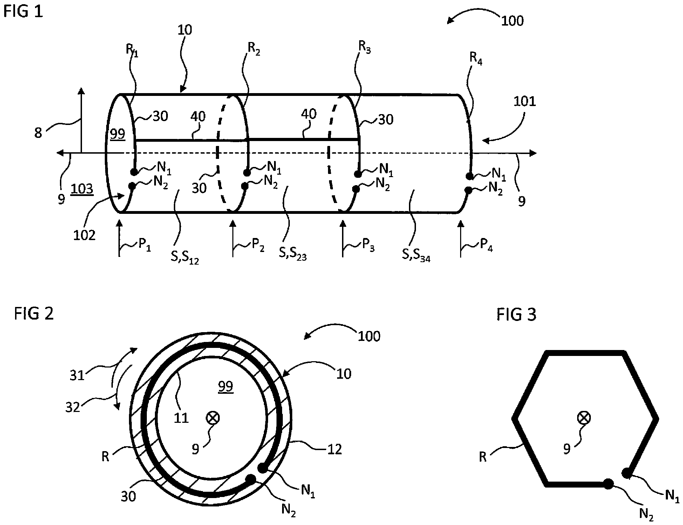

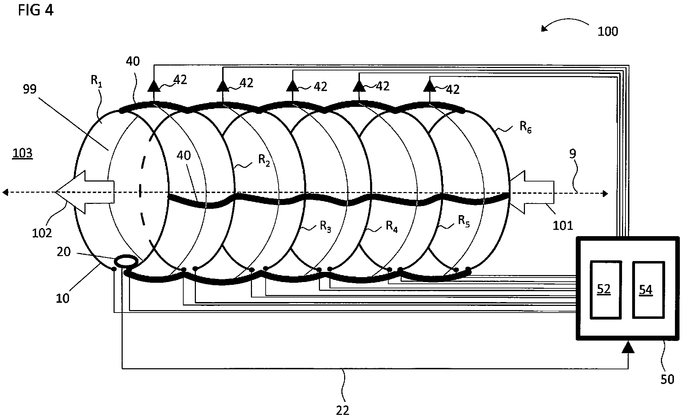

Fig. 1 shows a part of a smart hose 100, and Fig. 4 shows the smart hose 100 in general. The smart hose 100, hereinafter also referred to as the hose 100, includes a tubular body 10, a plurality of electrically conducting elements R, and flexible load cells 40. In example of Fig. 1 four electrically conducting elements R are depicted and referred to as R₁, R₂, R₃, R₄.

Generally, in the present disclosure, an individual electrically conducting element is also referred to as the element, and more than one electrically conducting elements is also referred to as the elements.

The tubular body 10 has a longitudinal axis 9. The tubular body 10 encloses or defines a drain path 99 extending along the longitudinal axis 9. The tubular body 10 has an inlet 101 or inlet opening 101 through which effluent that is desired to be drained out enters the tubular body 10, and has an outlet 102 or outlet opening 102 through which effluent that has entered the tubular body 10 is ejected out or emitted out or drained out of the tubular body 10. The effluent flows from the inlet 101 towards the outlet 102 via the drain path 99 and is finally ejected out to an outside 103 of the tubular body 10. The inlet 101 may be connected, particularly be in fluid communication, with an appliance where the effluent is generated, for example a washing machine or a dishwasher. The tubular body 10 is elastically deformable along the longitudinal axis 9. The tubular body 10 is also elastically deformable along a radial direction 8 normal to, i.e. perpendicular to, the longitudinal axis 9. The tubular body 10 may be formed of an elastic polymer, and may have a bellowed structure longitudinally.

The terms 'axially', 'radially', and similar terms as used in the present technique are in reference to the longitudinal axis 9, unless otherwise stated. The term 'longitudinally' or 'axially' means a direction along the longitudinal axis 9 or parallel to the longitudinal axis 9. The term 'radially' means a direction perpendicular to the longitudinal axis 9 i.e. along the radial direction 8.

The number and order of the elements depicted in Fig. 1 are for exemplary purposes only, and it may be appreciated by one skilled in the art that the hose 100 may include more than four elements R for example eight elements R or twelve elements R or fifteen elements R, so on and so forth. The electrically conducting element R₁ hereinafter also referred to as the element R₁ is located at the outlet 102 of the hose 100 and the electrically conducting element R₄, hereinafter also referred to as the element R₄ is located at the inlet 101 of the hose 100, whereas the electrically conducting elements R₂, R₃ hereinafter also referred to as the element R₃ and the element R₄ are located between the elements R₁ and R₂, thereby defining segments S in the tubular body 10, hereinafter also referred to as the body 10. Preferably the elements R₁, R₂, R₃, R₄ are placed such that the intervening segments S₁₂, S₂₃, S₃₄ are of equal length longitudinally.

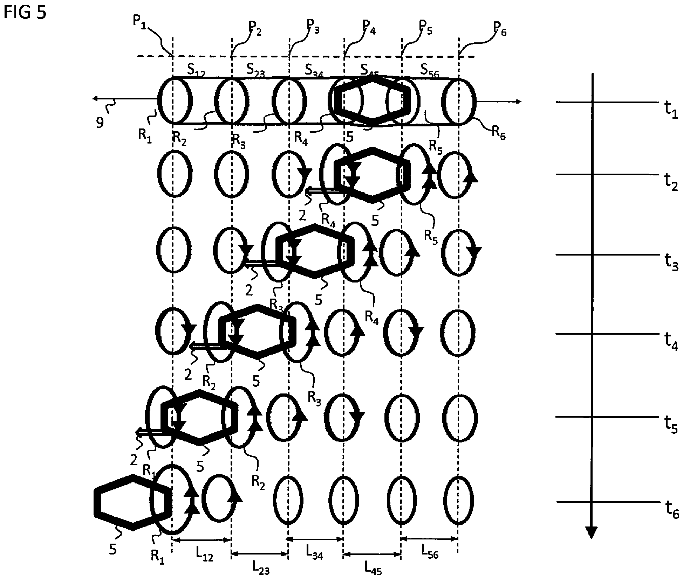

In general, as depicted in Figs. 1 and 4, the plurality of elements R₁, R₂, R₃, R₄, R₅, R₆ are serially arranged adjacent to each other and attached to the tubular body 10 at different positions P₁, P₂, P₃, P₄, P₅, P₆ along the longitudinal axis 9 to define a plurality of longitudinally disposed segments S₁₂, S₂₃, S₃₄, S₄₅, S₅₆ (also shown in Fig. 5) in the tubular body 10. As shown in the example of Fig. 1, the segment S₁₂ is defined between the elements R₁ and R₂, the segment S₂₃ is defined between the elements R₂ and R₃, the segment S₃₄ is defined between the elements R₃ and R₄, and so on and so forth. Thus, each segment S₁₂, S₂₃, S₃₄ is limited by a pair of the elements R, for example the segment S₁₂ is limited by a pair R₁-R₂ formed by the elements R₁ and R₂, the segment S₂₃ is limited by a pair R₂-R₃ formed by the elements R₂ and R₃, the segment S₃₄ is limited by a pair R₃-R₄ formed by the elements R₃ and R₄, and so on and so forth.

Thus, each segment S₁₂, S₂₃, S₃₄ has a corresponding pair R₁-R₂, R₂-R₃, R₃-R₄. Furthermore, each pair R₁-R₂, R₂-R₃, R₃-R₄ has an upstream member, i.e. the element disposed upstream, and a downstream member, i.e., the element disposed downstream, with respect to the direction of flow of the effluent i.e. from the inlet 101 towards the outlet 102.

Each of the elements R₁, R₂, R₃, R₄, R₅, R₆ at least partially encircles the longitudinal axis 9 as shown in Figs 1 to 4. Each element R₁, R₂, R₃, R₄, R₅, R₆ includes a first electrical node N₁, a second electrical node N₂ and a flow path 30 defined between the first and the second electrical node N₁, N₂. The first electrical node N₁, hereinafter also referred to as the first node N₁, and the second electrical node N₂, hereinafter also referred to as the second node N₂, are electrical contacts on each of the elements R₁, R₂, R₃, R₄, R₅, R₆. Electrical current can enter through of the nodes N₁, N₂ and exit through the other node N₁, N₂. In the hose 100, the nodes N₁, N₂ are electrically connected to a control unit 50, and particularly to an electrical source 54 that supplies electrical current to one of the nodes N₁, N₂. The electrical source 54, and the nodes N₁, N₂ form an electrical circuit. A micro-controller 52 is included in the control unit 50 and controls a magnitude and a direction of the current flow in the electrical circuit.

The flow path 30 conducts the electrical current between the nodes N₁, N₂. The electrical current can enter the flow path 30 through one of the electrical nodes N₁, N₂, and exit the flow path 30 through the other of the nodes N₁, N₂. For example, the electrical current may enter the flow path 30 through the second node N₂ and exit the flow path 30 through the first node N₁, and thus flow in a first direction for example a clockwise direction 31. Alternatively, the electrical current may enter the flow path 30 through the first node N₁ and exit the flow path 30 through the second node N₂ and thus flow in a second direction for example a counter-clockwise direction 32 or an anti-clockwise direction 32 i.e. opposite to the clockwise direction 31.

Furthermore, each of the elements R₁, R₂, R₃, R₄, R₅, R₆ is configured to undergo expansion, i.e. liner expansion in a material of the element R₁, R₂, R₃, R₄, R₅, R₆, when an electoral current of sufficient magnitude flows through the element R₁, R₂, R₃, R₄, R₅, R₆. The linear expansion in the material of the element R₁, R₂, R₃, R₄, R₅, R₆, results into a radial expansion or radial dilation of the element R₁, R₂, R₃, R₄, R₅, R₆. On cessation of the electrical current, the radial expansion is reverted resulting into radial contraction of the element R₁, R₂, R₃, R₄, R₅, R₆. The elements R₁, R₂, R₃, R₄, R₅, R₆ may be formed from lead or aluminium. Alternatively, the elements R₁, R₂, R₃, R₄, R₅, R₆ may be formed from an electrically conductive material, for example an alloy, having a linear co-efficient (α) of thermal expansion at 20°C equal to or greater than 30, the linear co-efficient (α) of thermal expansion expressed in 10⁻⁶ K⁻¹.

Since the element R₁, R₂, R₃, R₄, R₅, R₆ are attached to the body 10, the radial expansion and contraction of the element R₁, R₂, R₃, R₄, R₅, R₆, results into radial expansion and contraction of the tubular body 10 at the corresponding position P₁, P₂, P₃, P₄, P₅, P₆. As shown in Fig. 2 the element R may be attached to the tubular body 10 for example by embedding the element R into the body 10 between an inner surface 11 and an outer surface 12 of the body 10.

As shown in Figs. 1, 2 and 4, the elements R₁ R₁, R₂, R₃, R₄, R₅, R₆ are circular in shape for example ring shaped. The circular shape is a circular arc i.e. the elements R, R₁, R₂, R₃, R₄, R₅, R₆ are formed as open rings. In an embodiment of the hose 100, the circular arc shaped element R₁ R₁, R₂, R₃, R₄, R₅, R₆ is such that an angle subtended by the circular arc at the longitudinal axis 9, i.e. the major angle, is equal to or greater than 180 degrees and less than 360 degrees, particularly greater than 270 degrees. Alternatively, as shown in Fig. 3, the elements R may be polygonal in shape, preferably the polygonal shape is an open polygon. The polygon can have any number of sides for example the polygon may be a triangle, a rectangle, a pentagon, a hexagon, a heptagon, an octagon, a nonagon, a decagon, a hendecagon, a dodecagon, and so on and so forth, thus enabling different shapes of the hose 100.

As depicted in Figs. 1 and 4, at least one flexible load cell 40 extends between the elements R₁, R₂, R₃, R₄, R₅, R₆ of the pair R₁-R₂, R₂-R₃, R₃-R₄, etc for each segment, S₁₂, S₂₃, S₃₄ i.e. between the upstream and the downstream members of the pair. The flow cell 40 is coupled to the segment S₁₂, S₂₃, S₃₄ limited by the pair R₁-R₂, R₂-R₃, R₃-R₄ i.e. coupled to the tubular body 10 forming the segment S₁₂, S₂₃, S₃₄. The load cells 40 determine an axial distance L₁₂, L₂₃, L₃₄, L₄₅, L₅₆ (shown in Fig. 5) between the elements R₁, R₂, R₃, R₄, R₅, R₆ of the pair R₁-R₂, R₂-R₃, R₃-R₄, etc for example by converting the deformation experienced by the segment S₁₂, S₂₃, S₃₄ as a result of electromagnetic attraction or repulsion between the elements R₁, R₂, R₃, R₄, R₅, R₆ of the pair R₁-R₂, R₂-R₃, R₃-R₄, etc of the segment S₁₂, S₂₃, S₃₄-Furthermore, as shown in Fig. 4, the hose 100 includes a flow meter 20 that determines a flow rate of the effluent through the drain path 99. The flow meter 20 may be positioned at the outlet 102 or in the inner surface 11 of the body 10 in the vicinity of the outlet 102. The structure and principle of operation of the load cells 40 and of the flow meter 20 in general are well known in the art of mechanics and thus not explained herein in further details for sake of brevity.

Hereinafter Fig. 5 in combination with Fig. 4 has been used to explain functioning of the control unit 50, and to explain a scheme of working of the hose 100. Fig. 5 shows different successive time instances from t₁ to t₆, and relative orientations of the elements R₁, R₂, R₃, R₄, R₅, R₆ of the pair R₁-R₂, R₂-R₃, R₃-R₄, etc for each segment, S₁₂, S₂₃, S₃₄.

The control unit 50 includes the micro-controller 52, for example a processor, a microprocessor, a FPGA, etc, receives a signal 22 from the flow meter 20 and determines presence of at least a partial blockage 5 in the drain path 99. A flow rate lower than or equal to a default flow rate is indicative of a partial clogging, whereas a cessation of flow of the effluent i.e. a flow rate of null is indicative of a complete clogging of the drain path 99. The clogging, partial or complete, results from a blockage 5 that may be understood as a mass or accumulation of undesired solid or semi-solid particles that is stuck inside the tubular body 10 in the drain path 99 and thereby blocks the flow of the effluent from the inlet 101 to the outlet 102 of the hose 100. Thus, by using the flow rate information, provided to the control unit 50, of the effluent through the drain path 99 presence of the blockage 5 in the drain path 99 is determined or detected.

Thereafter, the electrical source 54 controlled by the micro-controller 52 successively provides probe electrical currents simultaneously to the upstream members R₂, R₃, R₄, R₅, R₆ and to the downstream members R₁, R₂, R₃, R₄, R₅ of the corresponding pairs R₁-R₂, R₂-R₃, R₃-R₄, R₄-R₅, R₅-R₆, respectively. For example, first simultaneously to the upstream member R₂ and the downstream member R₁ of the pair R₁-R₂, and then simultaneously to the upstream member R₃ and the downstream member R₂ of the pair R₂-R₃, and then simultaneously to the upstream member R₄ and the downstream member R₃ of the pair R₃-R₄, and so on and so forth until the blockage 5 is detected. The probe electrical currents provided to the both members of a given pair R₁-R₂, R₂-R₃, etc. are in same direction 31, 32, i.e. both members of the pairs R₁-R₂, R₂-R₃, etc. receive electrical current in either clockwise direction 31 or anti-clockwise direction 32. This causes the members of the pairs R₁-R₂, R₂-R₃, etc. to attract each other, consequently resulting in longitudinal contraction of the segment S₁₂, S₂₃, S₃₄, etc. of the tubular body 10. The segments S₁₂, S₂₃, S₃₄, etc. undergo default or predetermined longitudinal contraction in the axial lengths L₁₂, L₂₃, L₃₄, etc. except for the segment S₁₂, S₂₃, S₃₄, etc. in which the blockage 5 is present, for example in segment S₄₅ of Fig. 5 shown at time t₁. As aforementioned the axial lengths L₁₂, L₂₃, L₃₄, etc. are determined by the load cells 40 for each segment S₁₂, S₂₃, S₃₄, etc.

The micro-controller 52 receives a load signal 42 from the flexible load cells 40 of the segments S₁₂, S₂₃, S₃₄, etc. and determines a blocked segment, for example the segment S₄₅ of Fig. 5 shown at time t1. The blocked segment S₄₅ is the segment S₁₂, S₂₃, S₃₄, etc. of the tubular body 10 that undergoes the longitudinal contraction in the axial length L₁₂, L₂₃, L₃₄, etc. equal to or less than a predetermined threshold as a result of the probe electrical currents provided to the members R₄, R₅ of the segment S_{4S}.

After determining the blocked segment S₄₅, i.e. determining the location of the blockage, the control unit 50, particularly the micro-controller 52, and the electrical source 54 controlled by the micro-controller 52, provides a first electrical current to the downstream member R₄ of the pair R₄-R₅ i.e. to the element R₄ defining the blocked segment S₄₅. The magnitude or amplitude of the first electrical current, hereinafter also referred to as the first current is such that thermal heating resulting from the flow of the first current in the element R₄ causes radial expansion at the corresponding position P₄ in the tubular body 10, thus dilating the tubular body 10, and particularly cross-sectional areal of the drain path 99 at P₄. Thereafter, the control unit 50, particularly the micro-controller 52, and the electrical source 54 controlled by the micro-controller 52, provides a second electrical current to the upstream member R₅ of the pair R₄-R₅ i.e. to the element R₅ defining the blocked segment S₄₅. The second electrical current acts on the upstream member R₅ of the pair R₄-R₅ such that a push 2 is generated on the blockage 5 as shown in Fig. 5 for time instance t₂.

As a result of the radial expansion of the hose 100 and of the push 2 generated on the blockage 5, the blockage 5 is moved or displaced from the blocked segment S₄₅ to a segment downstream, i.e. to the segment S₂₃, with reference to the flow direction of the effluent, of the blocked segment S₄₅. In Fig. 5, time instance t₃ depicts the blockage 5 placed at the segment S₃₄ having moved from the segment S₄₅. The segment S₃₄ hereafter becomes the blocked segment S₃₄. The control unit 50, similar as to as aforementioned, thereafter provides a first electrical current to the downstream member R₃ of the pair R₃-R₄ defining the blocked segment S₃₄ and thereby causes radial expansion at the corresponding position P₃ in the tubular body 10. Thereafter, the control unit 50 provides a second electrical current to the upstream member R₄ of the pair R₃-R₄ defining the blocked segment S₃₄ such that a further push 2 is generated on the blockage 5. As a result of the radial expansion of the hose 100 and of the further push 2 generated on the blockage 5, the blockage 5 is moved or displaced from the blocked segment S₃₄ to a segment downstream, i.e. to the segment S₂₃, with reference to the flow direction of the effluent, of the blocked segment S₃₄. In Fig. 5, time instance t₄ depicts the blockage 5 placed at the segment S₂₃ having moved from the segment S₃₄. The segment S₂₃ hereafter becomes the blocked segment S₂₃. The aforementioned action of the control unit 50 is repeated till the blockage 5 is cleared out of the last segment S₁₂ i.e. the segment which ends at the outlet 102 of the hose 100. In this way the blockage 5 is cleared out of the hose 100, as shown in the time instance t₆ of Fig. 5.

The push 2 can be generated in a variety of ways. In an embodiment (not shown) of the hose 100, the second electrical current and the first electrical current are in same direction 31,32 i.e. in the clockwise direction 31 or the counter-clockwise direction 32, thereby causing attraction between the upstream member R₅ and the downstream member R₄ of the pair R₄-R₅ which in turn causes longitudinal contraction in the blocked segment, S₄₅ consequently generating the push 2 on the blockage. Since the downstream member R₄ is radially expanded or in other words dilated, the blockage 5 finds an exit through the downstream member R₄ into the segment S₃₄ downstream of the blocked segment S₄₅.

Alternatively, in another embodiment the hose 100, and as shown in example of Fig. 5 for time instance t₂, the control unit 50 provides the second electrical current to the upstream member R₅ with such magnitude to cause radial expansion at the corresponding position P₅ in the tubular body 10. The second electrical current and the first electrical currents are in different directions 31,32 and thus causing a longitudinal expansion of the blocked segment S₄₅ such as a squeeze on the blocked segment S₄₅. The control unit 50 then decreases the magnitude of the second electrical current to cause subsequent radial contraction at the corresponding position P₅ in the tubular body 10. As a result of the radial contraction subsequent to the radial expansion of the upstream member R₅ the push 2 is generated on the blockage 5. An example of magnitude of the first electrical current and the second electrical current may be 6 Ampere.

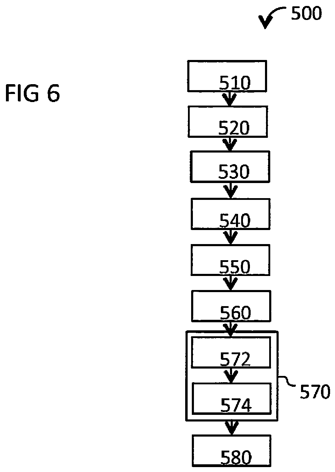

Fig. 6 in combination with Fig. 5 and Fig. 4 has been referred to hereinafter to explain a method 500 of the present technique. The method 500 is for clearing the blockage 5 in the hose 100. The hose 100 is same as the hose 100 described hereinabove in reference to Figs 1 to 5. In the method 100, a flow rate of the effluent through the drain path 99 is determined in a step 510, preferably by using the flow meter 20. Thereafter, presence of the blockage 5 in the drain path 99 is determined in a step 520, with the control unit 50 by using the flow rate of the effluent through the drain path 99 as explained earlier.

Subsequently in the method 100 a location of the blockage is determined by the following steps. First, in a step 530 probe electrical currents is successively provided simultaneously to the upstream members R₂, R₃, R₄, R₅, R₆ and to the downstream members R₁, R₂, R₃, R₄, R₅ of different pairs R₁-R₂, R₂-R₃, R₃-R₄, as explained earlier. Thereafter in a step 540, the axial distance L₁₂, L₂₃, L₃₄, L₄₅, L₅₆ between the elements R₁, R₂, R₃, R₄, R₅, R₆ of the pairs R₁-R₂, R₂-R₃, R₃-R₄, is determined. Finally, in a step 550, a blocked segment S₄₅ is determined.

In the method 100 of the present technique, after the location of the blockage has been determined i.e. after the blocked segment S₄₅ has been identified, the following steps are performed to clear the blockage 5 from the blocked segment S₄₅. In a step 560, a first electrical current is provided to the downstream member R₄ of the pair R₄-R₅, as explained earlier. Simultaneously or subsequently with the step 560, in a step 570 a second electrical current is provided to the upstream member R₅ of the pair R₄-R₅, as explained earlier, such that the push 2 is generated on the blockage 5.

In the method 500, as a result of the radial expansion or dilation of the hose 100, and as a result of the push 2 generated on the blockage 5, the blockage 5 is moved or displaced from the blocked segment S₄₅, as explained earlier, to the segment S₃₄, as explained earlier. The segment S₃₄ then becomes the blocked segment, and in the method 100 the steps 560 and 570 are repeated for the blocked segment S₃₄ until the blockage 5 is cleared out of the last segment S₁₂ at the exit of the hose 100.

As aforementioned the push 2 can be generated in various ways. In general, the push 2 is generated by either squeezing, i.e. radially contracting, the upstream member of the pair of the blocked segment, or by contracting the blocked segment by generating an electromagnetic attraction between the upstream and the downstream members of the pair of the blocked segment, or by both.

In an embodiment of the method 500, the second electrical current and the first electrical currents so provided in the step 560 and the step 570 are in different directions 31,32. Furthermore the step 570 includes a step 572 of providing the second electrical current to the upstream member R₅ to cause radial expansion at the corresponding position P₅ in the tubular body 10; and a step 574 of subsequently decreasing a magnitude of the second electrical current to cause subsequent radial contraction at the corresponding position P₅ in the tubular body 10. The push 2 is generated on the blockage 5 by the radial contraction subsequent to the radial expansion of the upstream member R₅. In a related embodiment of the method 500, the first and the second electrical currents so provided in the step 560 and the step 572 have same magnitude, before the magnitude of the second electrical current is subsequently decreased in the step 574, for example the magnitude of the first and the second electrical currents may be 6A (ampere) each, and subsequently the magnitude of the second electrical current is decreased to 3A (ampere).

In another embodiment of the method 500, the method 500 further includes a step 580 of providing a third electrical current to the element R₆ positioned immediately upstream of the upstream member R₅. The third electrical current is in same direction as the second electrical current; however a magnitude of the third electrical current is lesser than the magnitude of the first and the second electrical currents, for example the first and the second electrical currents may be 6A (ampere) each whereas the third electrical current is 3A (ampere). This causes a longitudinal contraction in the segment S₅₆ upstream of the blocked segment S₄₅ thus strengthening the push 2 on the blockage 5. Moreover, since the magnitude of the third electrical current is lesser the element R₆, and consequently the tubular body 10 at the corresponding position P₆, does not undergo dilation or radial expansion as compared to the radial expansion of the upstream member R₅, and thus inhibiting the blockage 5 from moving upstream in the hose 100.

Thus, the present invention presents a smart hose 100 capable of clearing a blockage 5. The smart hose 100 includes a tubular body 10, a flow meter 20, a plurality of electrically conducting elements (R₁, R₂, R₃, R₄, R₅, R₆), flexible load cells 40 and a control unit 50. The electrically conducting elements (R₁, R₂, R₃, R₄, R₅, R₆) are serially arranged along a longitudinal axis 9 of the smart hose 100, and are attached to a body 10 of the smart hose 100. On electromagnetic excitation of adjacent electrically conducting elements (R₁, R₂, R₃, R₄, R₅, R₆) segments in the smart hose 100 are elastically deformable longitudinally. Furthermore, due to linear expansion of the electrically conducting elements (R₁, R₂, R₃, R₄, R₅, R₆) the smart hose 100 at positions where the body 10 is attached to the electrically conducting elements (R₁, R₂, R₃, R₄, R₅, R₆) is elastically deformable radially. The flow meter 20 and the load cells 40 help to determine a blockage, and its location, in the smart hose 100. By elastically deforming the segments in the longitudinal and/or the radial directions, a blockage in smart hose 100 is moved towards an outside 103 of the smart hose 100.

### List of reference signs

- 2: push
- 5: blockage
- 8: radial direction
- 9: longitudinal axis
- 10: tubular body
- 11: inner surface of the tubular body
- 12: outer surface of the tubular body
- 20: flow meter
- 22: signal from the flow meter
- 30: flow path
- 31: clockwise direction
- 32: anti-clockwise direction
- 40: flexible load cell
- 42: load signal
- 50: control unit
- 52: microcontroller
- 54: electrical source
- 99: drain path
- 100: smart hose
- 101: inlet of the smart hose
- 102: outlet of the smart hose
- 103: outside of the smart hose
- 500: method
- 510: determining a flow rate of the effluent
- 520: determining presence of at least a partial blockage
- 530: successively providing probe electrical currents
- 540: determining axial distances
- 550: determining blocked segment
- 560: providing the first electrical current
- 570: providing the second electrical current
- 572: providing the second electrical current to cause radial expansion
- 574: subsequently decreasing the magnitude of the second electrical current
- 580: providing the third electrical current
- L₁₂-L₃₄: axial distances
- N₁: first electrical node
- N₂: second electrical node
- P₁-P₆: positions of the electrically conducting elements
- R: electrically conducting element(s)
- R₁-R₆: electrically conducting elements
- R₁-R₂: to R₅-R₆ pairs of the electrically conducting elements
- S: segment(s)
- S₁₂-S₅₆: segments
- t₁: initial time instance
- t₂: time instance after t₁
- t₃: time instance after t₂
- t₄: time instance after t₃
- t₅: time instance after t₄
- t₆: time instance after t₅

## Claims

1. A smart hose (100) for ejecting an effluent to an outside (103) of the smart hose (100), the smart hose (100) comprising:
- a tubular body (10) having a longitudinal axis (9), wherein the tubular body (10) defines a drain path (99) extending along the longitudinal axis (9) and wherein the tubular body (10) is elastically deformable along the longitudinal axis (9) and along a radial direction (8) normal to the longitudinal axis (9);
- a flow meter (20) configured to determine a flow rate of the effluent through the drain path (99);
- a plurality of electrically conducting elements (R₁, R₂, R₃, R₄) serially arranged adjacent to each other and attached to the tubular body (10) at different positions (P₁, P₂, P₃, P₄) along the longitudinal axis (9) to define a plurality of longitudinally disposed segments (S₁₂, S₂₃, S₃₄) in the tubular body (10), each segment (S₁₂, S₂₃, S₃₄) limited by a pair (R₁-R₂, R₂-R₃, R₃-R₄) of the electrically conducting elements (R₁, R₂, R₃, R₄) and wherein an upstream member (R₁, R₂, R₃) of the pair (R₁-R₂, R₂-R₃, R₃-R₄) is disposed upstream and a downstream member (R₂, R₃, R₄) of the pair (R₁-R₂, R₂-R₃, R₃-R₄) is disposed downstream of the segment (S₁₂, S₂₃, S₃₄),
- wherein each of the electrically conducting elements (R₁, R₂, R₃, R₄) at least partially encircles the longitudinal axis (9) and includes a first electrical node (N₁), a second electrical node (N₂) and a flow path (30) defined thereinbetween for conduction of an electrical current through the flow path (30) in a clockwise direction (31) or an anti-clockwise direction (32) between the first electrical node (N₁) and the second electrical node (N₂), wherein each of the electrically conducting element (R₁, R₂, R₃, R₄) is configured to undergo expansion and contraction on conduction and cessation of the electrical current, respectively, resulting into radial expansion or radial contraction of the tubular body (10) at the corresponding position (P₁, P₂, P₃, P₄);
- at least one flexible load cell (40) extending between the electrically conducting elements (R₁, R₂, R₃, R₄) of the pair (R₁-R₂, R₂-R₃, R₃-R₄) and coupled to the segment (S₁₂, S₂₃, S₃₄) limited by the pair (R₁-R₂, R₂-R₃, R₃-R₄), wherein the load cell (40) is configured to determine an axial distance (L₁₂, L₂₃, L₃₄) between the electrically conducting elements (R₁, R₂, R₃, R₄) of the pair (R₁-R₂, R₂-R₃, R₃-R₄);
- a control unit (50) having an electrical source (54) and a microcontroller (52), wherein the control unit (50) is configured to:
- receive a signal (22) from the flow meter (20) and to determine presence of at least a partial blockage (5) in the drain path (99) dependant on the flow rate of the effluent through the drain path (99);
- successively provide probe electrical currents simultaneously to the upstream and downstream members (R₁, R₂, R₃, R₄) of different pairs (R₁-R₂, R₂-R₃, R₃-R₄), the probe electrical currents provided to the members (R₁, R₂, R₃, R₄) are in same direction (31,32) to cause the members (R₁, R₂, R₃, R₄) of the pair (R₁-R₂, R₂-R₃, R₃-R₄) to attract each other, and thereby causing longitudinal contraction in the segment (S₁₂, S₂₃, S₃₄) of the tubular body (10) limited by the pair (R₁-R₂, R₂-R₃, R₃-R₄);
- receive a load signal (42) from the flexible load cells (40) of the segments (S₁₂, S₂₃, S₃₄) and to determine a blocked segment (S₄₅), wherein the blocked segment (S₄₅) is the segment (S₁₂, S₂₃, S₃₄) of the tubular body (10) that undergoes the longitudinal contraction equal to or less than a predetermined threshold as a result of the probe electrical currents provided to the members (R₁, R₂, R₃, R₄) of the segment (S₁₂, S₂₃, S₃₄);
- provide a first electrical current to the downstream member (R₄) of the pair (R₄-R₅) defining the blocked segment (S₄₅) to cause radial expansion at the corresponding position (P₄) in the tubular body (10); and
- provide a second electrical current to the upstream member (R₅) of the pair (R₄-R₅) defining the blocked segment (S₄₅) such that a push (2) is generated on the blockage (5).

2. The smart hose (100) according to claim 1, wherein the second electrical current and the first electrical current are in same direction (31,32) to cause attraction between the upstream member (R₅) and the downstream member (R₄) generating the push (2) on the blockage (5) resulting from a longitudinal contraction of the blocked segment (S₄₅).

3. The smart hose (100) according to claim 1, wherein the control unit (50) is configured to:
- provide the second electrical current to the upstream member (R₅) to cause radial expansion at the corresponding position (P₅) in the tubular body (10), wherein the second electrical current and the first electrical currents are in different directions (31,32); and
- to subsequently decrease a magnitude of the second electrical current to cause subsequent radial contraction at the corresponding position (P₅) in the tubular body (10), wherein the push (2) is generated on the blockage (5) by the radial contraction subsequent to the radial expansion of the upstream member (R₅).

4. The smart hose (100) according to any of claims 1 to 3, wherein the electrically conducting elements (R₁, R₂, R₃, R₄) are polygonal in shape.

5. The smart hose (100) according to claim 4, wherein the polygonal shape is an open polygon.

6. The smart hose (100) according to claim 1 to 3, wherein the electrically conducting elements (R₁, R₂, R₃, R₄) are circular in shape.

7. The smart hose (100) according to claim 6, wherein the circular shape is a circular arc.

8. The smart hose (100) according to claim 7, wherein an angle subtended by the circular arc at the longitudinal axis (9) is equal to or greater than 180 degree and less than 360 degree, particularly greater than 270 degree.

9. The smart hose (100) according to any of claims 1 to 8, wherein the electrically conducting elements (R₁, R₂, R₃, R₄) are formed from lead or aluminium.

10. The smart hose (100) according to any of claims 1 to 8, wherein the electrically conducting elements (R₁, R₂, R₃, R₄) are formed of an electrically conductive material having a linear co-efficient (α) of thermal expansion at 20°C equal to or greater than 30.

11. A method (500) for clearing a blockage (5) in a smart hose (100), wherein the smart hose (100) is for ejecting an effluent to an outside (103) of the smart hose (100) and includes:
- a tubular body (10) having a longitudinal axis (9), wherein the tubular body (10) defines a drain path (99) extending along the longitudinal axis (9) and wherein the tubular body (10) is elastically deformable along the longitudinal axis (9) and along a radial direction (8) normal to the longitudinal axis (9);
- a plurality of electrically conducting elements (R₁, R₂, R₃, R₄) serially arranged adjacent to each other and attached to the tubular body (10) at different positions (P₁, P₂, P₃, P₄) along the longitudinal axis (9) to define a plurality of longitudinally disposed segments (S₁₂, S₂₃, S₃₄) in the tubular body (10), each segment (S₁₂, S₂₃, S₃₄) limited by a pair (R₁-R₂, R₂-R₃, R₃-R₄) of the electrically conducting elements (R₁, R₂, R₃, R₄) and wherein an upstream member (R₁, R₂, R₃) of the pair (R₁-R₂, R₂-R₃, R₃-R₄) is disposed upstream and a downstream member (R₂, R₃, R₄) of the pair (R₁-R₂, R₂-R₃, R₃-R₄) is disposed downstream of the segment (S₁₂,S₂₃, S₃₄),
- wherein each of the electrically conducting elements (R₁, R₂, R₃, R₄) at least partially encircles the longitudinal axis (9) and includes a first electrical node (N₁). a second electrical node (N₂) and a flow path (30) defined thereinbetween for conduction of an electrical current through the flow path (30) in a clockwise direction (31) or an anti-clockwise direction (32) between the first electrical node (N₁) and the second electrical node (N₂), wherein each of the electrically conducting element (R₁, R₂, R₃, R₄) is configured to undergo expansion and contraction on conduction and cessation of the electrical current, respectively, resulting into radial expansion or radial contraction of the tubular body (10) at the corresponding position (P₁, P₂, P₃, P₄); and
- at least one flexible load cell (40) extending between the electrically conducting elements (R₁ R₂, R₃, R₄) of the pair (R₁-R₂, R₂-R₃, R₃-R₄) and coupled to the segment (S₁₂, S₂₃, S₃₄) limited by the pair (R₁-R₂, R₂-R₃, R₃-R₄), wherein the load cell (40) is configured to determine an axial distance (L₁₂, L₂₃, L₃₄) between the electrically conducting elements (R₁, R₂, R₃, R₄) of the pair (R₁-R₂, R₂-R₃, R₃-R₄);
the method (500) comprising:
- determining (510) a flow rate of the effluent through the drain path (99);
- determining (520) presence of at least a partial blockage (5) in the drain path (99) dependant on the flow rate of the effluent through the drain path (99);
- successively providing (530) probe electrical currents simultaneously to the upstream and downstream members (R₁, R₂, R₃, R₄) of different pairs (R₁-R₂, R₂-R₃, R₃-R₄), the probe electrical currents provided to the members (R₁, R₂, R₃, R₄) are in same direction (31,32) to cause the members (R₁, R₂, R₃, R₄) of the pair (R₁-R₂, R₂-R₃, R₃-R₄) to attract each other, and thereby causing longitudinal contraction in the segment (S₁₂, S₂₃, S₃₄) of the tubular body (10) limited by the pair (R₁-R₂, R₂-R₃, R₃-R₄);
- determining (540) an axial distance (L₁₂, L₂₃, L₃₄) between the electrically conducting elements (R₁, R₂, R₃, R₄) of the pair (R₁-R₂, R₂-R₃, R₃-R₄);
- determining (550) a blocked segment (S₄₅), wherein the blocked segment (S₄₅) is the segment (S₁₂, S₂₃, S₃₄) of the tubular body (10) that undergoes the longitudinal contraction equal to or less than a predetermined threshold as a result of the probe electrical currents provided to the members (R₁, R₂, R₃, R₄) of the segment (S₁₂, S₂₃, S₃₄);
- providing (560) a first electrical current to the downstream member (R₄) of the pair (R₄-R₅) defining the blocked segment (S₄₅) to cause radial expansion at the corresponding position (P₄) in the tubular body (10); and
- providing (570) a second electrical current to the upstream member (R₅) of the pair (R₄-R₅) defining the blocked segment (S₄₅) such that a push (2) is generated on the blockage (5).

12. The method (500) according to claim 11, wherein the second electrical current and the first electrical current so provided (560,570) are in same direction (31,32) to cause attraction between the upstream member (R₅) and the downstream member (R₄) generating the push (2) on the blockage (5) resulting from a longitudinal contraction of the blocked segment (S₄₅).

13. The method (500) according to claim 11, wherein the second electrical current and the first electrical currents so provided (560,570) are in different directions (31,32), and wherein providing (570) the second electrical current comprises:
- providing (572) the second electrical current to the upstream member (R₅) to cause radial expansion at the corresponding position (P₅) in the tubular body (10); and
- subsequently decreasing (574) a magnitude of the second electrical current to cause subsequent radial contraction at the corresponding position (P₅) in the tubular body (10), wherein the push (2) is generated on the blockage (5) by the radial contraction subsequent to the radial expansion of the upstream member (R₅).

14. The method (100) according to claim 13, wherein the first and the second electrical currents so provided (560,572) have same magnitude, before the magnitude of the second electrical current is subsequently decreased (574).

15. The method (500) according to claim 14, wherein the method (500) further comprises:
- providing (580) a third electrical current to the electrically conducting element (R₆) positioned immediately upstream of the upstream member (R₅), wherein the third electrical current is in same direction (31,32) as the second electrical current and wherein a magnitude of the third electrical current is lesser than the magnitude of the first and the second electrical currents.
